# FASCICULE DE BREVET EUROPEEN

(11) **EP 4 006 600 B1**
(45) Date de publication et mention de la délivrance du brevet: **15.10.2025**
(21) Numéro de dépôt: 21206818.3
(22) Date de dépôt: 06.11.2021
(51) Int. Cl.: G02B 6/30, G02B 6/293

(54) **ENSEMBLE COMPORTANT UNE PREMIÈRE ET UNE SECONDE PUCES PHOTONIQUES RAPPORTÉES L'UNE SUR L'AUTRE**
ANORDNUNG MIT EINEM ERSTEN UND EINEM ZWEITEN ÜBEREINANDER ANGEBRACHTEN PHOTONENCHIP
ASSEMBLY COMPRISING A FIRST AND A SECOND PHOTONIC CHIPS OFFSET ON ONE ANOTHER

(30) Priorité: 30.11.2020 FR 2012427
(43) Date de publication de la demande: 01.06.2022
(73) Titulaire: Commissariat à l'Energie Atomique et aux Energies Alternatives, 75015 Paris (FR)
(72) Inventeur: HASSAN, Karim, 38054 Grenoble Cedex 09 (FR)
(74) Mandataire: INNOV-GROUP

(56) Documents cités:
- EP-A1- 3 339 923
- WO-A1-2014/176175
- WO-A1-2019/152990
- US-A1- 2002 076 150
- US-A1- 2003 081 902
- US-A1- 2003 223 675
- US-A1- 2016 349 454
- US-A1- 2019 265 415

## Description

L'invention concerne un ensemble comportant une première et une seconde puces photoniques rapportées l'une sur l'autre par collage au niveau d'une interface de collage. L'invention concerne aussi une puce photonique pour la réalisation de cet ensemble ainsi qu'un procédé de fabrication de cet ensemble.

Dans de tels ensembles, il est nécessaire de raccorder optiquement des composants optiques contenus dans la première puce photonique à des composants optiques contenus dans la seconde puce photonique. Pour cela, un dispositif de couplage optique des deux puces photoniques est réalisé en partie dans la première puce photonique et en partie dans la seconde puce photonique.

Pour coller la première puce photonique sur la seconde puce photonique, il faut utiliser un outil de placement qui positionne automatiquement la première puce photonique à l'emplacement souhaité sur la seconde puce photonique. Or, les erreurs d'alignement classiquement observées avec de tels outils de placement sont, par exemple, comprises entre +3 µm et -3 µm notamment dans une direction perpendiculaire à la direction de propagation du signal optique. Le dispositif de couplage optique doit donc être robuste vis-à-vis de telles erreurs d'alignement.

Actuellement, les dispositifs connus de couplage optique, suffisamment robustes vis-à-vis de telles erreurs d'alignement, comportent de nombreux composants optiques tels que des lentilles et des miroirs.

De l'état de la technique est également connu de US2002/076150A1, WO2019/152990A1, US10288812B1, US2016/349454A1, US2019/265415A1, US2003081902A1, EP3339923A1, US2003223675A1, WO2014176175A1 et US2016/327748A1. Ces documents décrivent des dispositifs de couplage optique entre des fibres optiques et des guides d'onde d'une puce photonique. Ces dispositifs de couplage optique ne sont pas suffisamment robustes vis-à-vis des erreurs d'alignement.

L'invention vise à proposer un ensemble de deux puces photoniques collées l'une sur l'autre et comportant un dispositif de couplage optique plus simple à réaliser tout en restant tolérant vis-à-vis des erreurs d'alignement au moins dans une direction donnée.

Elle a donc pour objet un ensemble conforme à la revendication 1.

L'invention a également pour objet une seconde puce photonique pour la réalisation de l'ensemble ci-dessus conforme à la revendication 9.

Enfin, l'invention a également pour objet un procédé de fabrication de l'ensemble ci-dessus conforme à la revendication 10.

L'invention sera mieux comprise à la lecture de la description qui va suivre, donnée uniquement à titre d'exemple non limitatif et faite en se référant aux dessins sur lesquels :
- la figure 1 est une illustration schématique en coupe verticale d'un ensemble comportant une première et une seconde puces photoniques rapportées par collage l'une sur l'autre ;
- la figure 2 est une illustration en vue de dessus d'une zone de couplage d'un dispositif de couplage des première et seconde puces photoniques de l'ensemble de la figure 1 ;
- la figure 3 est un organigramme d'un procédé de conception et de fabrication de l'ensemble de la figure 1 ;
- la figure 4 est une illustration schématique, en vue de dessus, de la zone de couplage de la figure 2 dans un cas particulier ;
- la figure 5 est un graphe illustrant le transfert d'énergie entre deux guides d'onde de la zone de couplage de la figure 4 ;
- les figures 6, 7 et 8 sont des profils de taux de transmission d'énergie entre les première et seconde puces photoniques de l'ensemble de la figure 1 dans différentes situations; et
- la figure 9 est une illustration schématique d'un autre mode de réalisation d'une zone de couplage susceptible d'être utilisé à la place de la zone de couplage de la figure 2.

Dans la suite de cette description, les caractéristiques et fonctions bien connues de l'homme du métier ne sont pas décrites en détail.

Dans cette description, des exemples détaillés de modes de réalisation sont d'abord décrits dans un chapitre I en référence aux figures. Ensuite, dans un chapitre II, des variantes de ces modes de réalisation sont présentées. Enfin, les avantages des différents modes de réalisation sont présentés dans un chapitre III.

### Chapitre I : Exemples de mode de réalisation

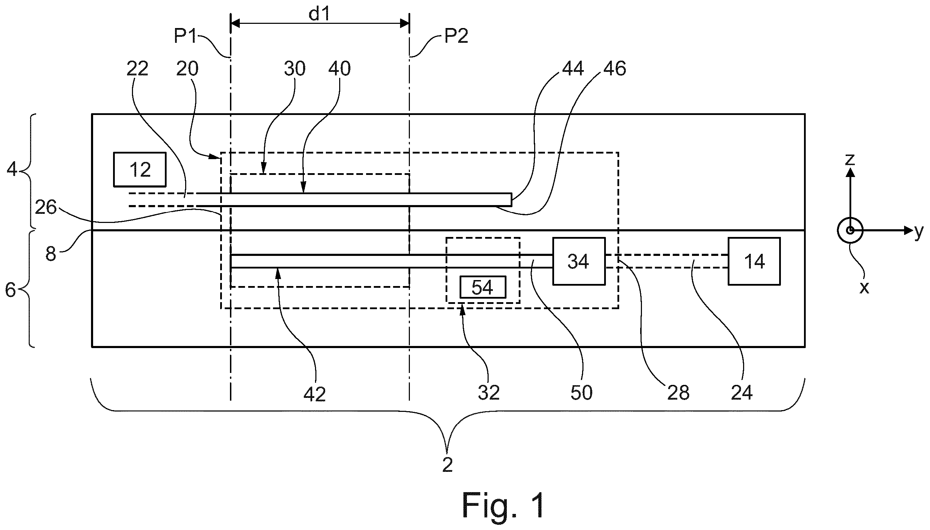

La figure 1 représente un ensemble 2 comportant une puce photonique 4 collée sur une puce photonique 6 au niveau d'une interface 8 de collage. L'interface 8 s'étend dans un plan horizontal parallèle à des directions X et Y d'un repère orthogonal XYZ. Dans ce repère, la direction Z désigne la direction verticale. Par la suite, les termes tels que « au-dessus », « au-dessous », « supérieur », « inférieur » et similaires sont définis par rapport à la direction Z.

Le collage entre les puces 4 et 6 peut être un collage direct, c'est-à-dire sans apport de matière ou un collage à l'aide d'une couche de colle interposée entre les deux puces 4 et 6.

Les puces 4 et 6 comportent chacune au moins un composant photonique qui génère, mesure, transforme ou transporte un signal optique. Typiquement, la longueur d'onde λ du signal optique est comprise entre 1260 nm et 1625 nm et, de préférence, entre 1260 nm et 1360 nm (bande O) ou entre 1530 nm et 1565 nm (bande C). Dans cet exemple la longueur d'onde λ est égale à 1310 nm.

Pour simplifier la figure 1, un seul composant photonique 12 a été représenté dans la puce 4 et un seul composant photonique 14 a été représenté dans la puce 6.

L'ensemble comporte un dispositif 20 de couplage optique qui permet de raccorder optiquement les puces 4 et 6. Ici, le dispositif 20 raccorde optiquement le composant 12 au composant 14 à travers l'interface 8. A cet effet, le dispositif 20 raccorde optiquement un guide d'onde 22 d'entrée, situé à l'intérieur de la puce 4, à un guide d'onde 24 de sortie situé à l'intérieur de la puce 6. Les guides d'onde 22 et 24 sont optiquement raccordés, respectivement, aux composants optiques 12 et 14.

Le dispositif 20 transfère l'essentiel de l'énergie du signal optique qui se propage dans le guide d'onde 22 vers le guide d'onde 24. Ici, par « l'essentiel de l'énergie », on désigne au moins 50 % ou 60 % de l'énergie, à la longueur d'onde λ, du signal optique qui se propage dans le guide 22. Par la suite, ce pourcentage est également appelé taux de transmission. Une partie des guides d'onde 22 et 24 est représentée en pointillés pour indiquer que seule une portion de ces guides d'onde a été représentée sur la figure 1.

Dans ce mode de réalisation, les guides d'onde sont conformés pour guider et propager le signal optique à la longueur d'onde λ. A cet effet, chaque guide d'onde comporte un cœur réalisé dans un premier matériau entouré d'une gaine réalisée dans un second matériau. L'indice de réfraction du cœur est supérieur à l'indice de réfraction de la gaine. Typiquement, l'indice de réfraction du cœur est au moins 1,2 fois ou 1,3 fois supérieur à l'indice de réfraction de la gaine. Dans cet exemple de réalisation, le cœur des guides d'onde est réalisé en silicium et leur gaine est réalisée en oxyde de silicium. La section transversale de ces guides d'onde est rectangulaire ou en forme de « T ». Sur les figures, seul le cœur des guides d'onde est représenté.

Une partie du dispositif 20 est réalisée à l'intérieur de la puce 4. Cette partie comporte une entrée 26 qui reçoit le signal optique qui se propage dans le guide 22. Le dispositif 20 comporte aussi une autre partie réalisée à l'intérieur de la puce 6. Cette autre partie comporte une sortie 28 qui émet le signal optique dans le guide d'onde 24.

Entre l'entrée 26 et la sortie 28, le dispositif 20 comporte successivement :
- une zone 30 de couplage évanescent ;
- une zone 32 d'adaptation de phase ; et
- un sommateur 34 de puissance.

Les couplages évanescents sont bien connus. Par exemple, ils sont définis dans le livre suivant R. G. Hunsperger : "Intergrated Optics : Theory and Technology", Springer, 2002, page 154-155.

La zone 30 s'étend depuis un plan vertical P1 jusqu'à un plan vertical P2. Les plans P1 et P2 sont parallèles et orthogonaux à la direction Y. Le plan P1 est situé après l'entrée 26 et le plan P2 est situé avant la sortie 28.

La zone 30 comporte un guide d'onde 40 réalisé dans la puce 4 et un réseau 42 de plusieurs guides d'onde réalisés, en dessous, dans la puce 6.

Dans ce premier mode de réalisation, le guide 40 est un guide d'onde rectiligne qui s'étend principalement parallèlement à la direction Y. Autrement dit, dans un plan horizontal, l'angle θ entre la direction Y et l'axe du guide 40 est compris entre -1° et +1°.

Le guide 40 débute au niveau de l'entrée 26 et se termine bien après le plan P2 au niveau d'une extrémité 44. Pour cela, la longueur du guide 40 est supérieure à la distance d1 qui sépare les plans P1 et P2. Ici, la longueur du guide 40 est au moins supérieure à la distance d1 + 3 µm et, de préférence, supérieure à la distance d1 + 6 µm ou + 10 µm.

Grâce à cela, même si la puce 4 est placée sur la puce 6 à l'aide d'un outil de placement dont la précision, dans la direction Y, est de plus ou moins 3 µm, il est certain que le guide 40 traverse complètement l'espace compris entre les plans P1 et P2 et traverse donc complètement la zone 30 de couplage évanescent.

A titre d'exemple, la largeur de la section transversale du guide 40 est égale à 400 nm et son épaisseur est égale à 300 nm. Le guide 40 présente également une face inférieure 46 qui s'étend dans un plan horizontal. L'indice de réfraction du guide 40 est noté nᵣ₄₀ et son indice effectif de propagation est noté n_{eff40}.

L'indice effectif d'un guide d'onde est proportionnel à la « constante de phase du mode ». Il est défini par la relation suivante n_{g} = n_{eff} - λdn_{eff}/dλ, où n_{g} est l'indice de groupe et λ est la longueur d'onde du signal optique guidé par ce guide. L'indice effectif est, par exemple, déterminé par simulation numérique ou expérimentalement.

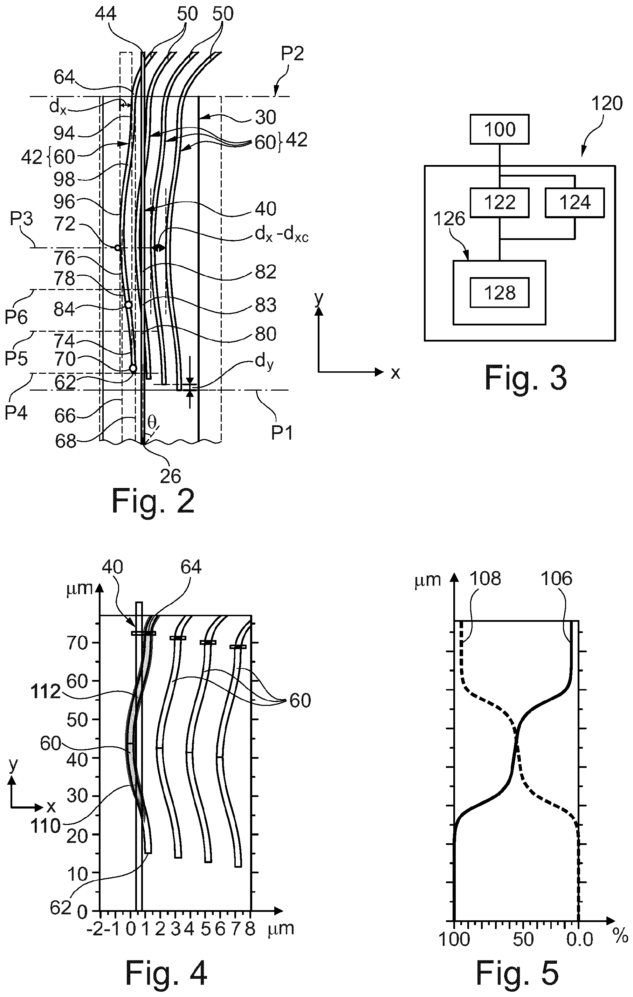

Le réseau 42 débute au niveau du plan P1 et se termine au niveau du plan P2. Le plan P1 comporte au moins une des extrémités distales des guides d'onde du réseau 42. Le plan P2 comporte au moins l'une des extrémités proximales des guides d'onde du réseau 42. Ce réseau 42 est décrit plus en détail en référence à la figure 2.

Chacune des extrémités proximales des guides d'onde du réseau 42 est raccordée à une entrée respective du sommateur 34 par l'intermédiaire de guides d'onde respectifs 50. Les guides d'onde 50 traversent chacun la zone 32. La zone 32 a pour fonction de modifier la phase des signaux optiques qui se propagent dans chacun des guides 50 pour que les phases de ces signaux optiques reçus sur les entrées du sommateur 34 soient égales. A cet effet, la zone 32 comporte un déphaseur réglable 54 associé à chacun des guides d'onde 50 qui traversent la zone 32. Ici, chaque déphaseur 54 est un dispositif connu sous le terme de « chaufferette » (« heater » en anglais) et qui permet de chauffer spécifiquement le guide d'onde 50 auquel il est associé. Le fait de chauffer une portion du guide 50 modifie ses propriétés optiques et permet de modifier la phase du signal optique qui se propage à l'intérieur de ce guide. Bien que non représenté, chaque dispositif 54 est raccordé à une unité de commande intégrée dans la puce 6. Cette unité commande chaque dispositif 54 pour que les phases des signaux optiques qui se propagent dans les guides 50 soient égales au niveau des entrées du sommateur 34. Par exemple, pour cela, l'unité de commande mesure l'énergie du signal optique en sortie du sommateur 34 et ajuste automatiquement et en permanence, en fonction de cette mesure, l'alimentation des dispositifs 54 pour maximiser l'énergie du signal optique sur cette sortie du sommateur 34. En effet, l'énergie en sortie du sommateur 34 est maximale quand les signaux optiques reçus sur ses entrées sont en phase.

Le sommateur 34 comporte des entrées optiquement raccordées à l'extrémité de chacun des guides 50 pour recevoir les signaux optiques à sommer. Il comporte aussi une sortie raccordée optiquement à la sortie 28.

Le sommateur 34 combine les différents signaux optiques reçus simultanément sur ses entrées pour former un seul signal optique restitué sur sa sortie. Lors de cette combinaison, les énergies des signaux optiques reçus sur ses entrées sont additionnées les unes aux autres de sorte que l'énergie du signal restitué sur la sortie est supérieure à l'énergie de chacun des signaux optiques reçus sur ses entrées. Par exemple, le sommateur 34 est réalisé en raccordant en cascade plusieurs sommateurs élémentaires de puissance. Chacun de ces sommateurs élémentaires comportent seulement deux entrées pour recevoir deux signaux optiques à additionner et une seule sortie sur laquelle est délivré le signal optique résultant de cette addition. Le « raccordement en cascade » consiste à raccorder les sorties de deux sommateurs élémentaires différents à des entrées respectives d'un autre sommateur élémentaire et ainsi de suite pour obtenir le nombre d'entrées requises pour le sommateur 34. Par exemple, un sommateur élémentaire est un interféromètre multimode connu sous l'acronyme MMI (« MultiMode Interferometer »).

La figure 2 représente plus en détail un premier mode de réalisation de la zone 30 de couplage évanescent. Le réseau 42 comporte N guides d'onde 60 identiques les uns aux autres. Les guides 60 sont disposés les uns à côté des autres dans un plan horizontal. Chaque guide 60 est décalé par rapport à son plus proche voisin à gauche :
- d'un pas dₓ- d_{xc} dans la direction X, et
- d'un pas d_{y} dans la direction Y.

Dans ce texte, les termes droite et gauche sont définis par rapport à la direction X.

Le nombre N de guides 60 est choisi pour que la distance d₂ entre le guide 60 le plus à droite et le guide 60 le plus à gauche soit supérieure à la tolérance, dans la direction X, sur la position de l'outil de placement utilisé pour assembler les puces 4 et 6. Ici, la précision de l'outil de placement dans la direction X est de plus ou moins 3 µm. Dès lors, le nombre N est choisi pour que la distance d₂ soit supérieure à 6 µm. Ce nombre N est choisi après que le pas dₓ - d_{xc} ait été déterminé. A titre d'illustration, sur la figure 2, N est égal à quatre.

Puisque les guides 60 sont structurellement identiques les uns aux autres, par la suite, seul un de ces guides 60 est décrit plus en détail.

Le guide 60 s'étend principalement dans la direction Y depuis une extrémité distale 62 jusqu'à une extrémité proximale 64. L'extrémité proximale 64 est optiquement raccordée à un guide 50 respectif. Ici, les cœurs des guides 50 et 60 ne forment qu'un seul bloc de matière. Ainsi, le guide 60 se prolonge, au-delà de l'extrémité 64, par le guide 50.

L'extrémité 62 est libre et marque le début du guide 60. Les extrémités 62 et 64 de tous les guides 60 sont situées entre les plans P1 et P2. Ici, l'extrémité 64 du guide 60 la plus à gauche est située dans le plan P2 et l'extrémité 62 du guide 60 le plus à droite est située dans le plan P1.

Le couplage optique entre les guides 50 et le guide 40 doit être faible et, de préférence, inexistant. Pour cela, ici, chaque guide 50 suit une trajectoire en quart de rond dont le rayon de courbure est deux ou trois fois plus petit que le rayon de courbure Rmin₆₀ du guide 60. Ce rayon de courbure reste suffisamment grand pour que les pertes optiques par courbure du guide 50 soient faibles. Pour cela, le rayon de courbure du guide 50 est supérieur à 5µm, 15 µm ou 20µm. Par exemple, ici, le rayon de courbure du guide 50 est égal à 25 µm.

Le guide 60 est symétrique par rapport à un plan P3 perpendiculaire à la direction Y. Par conséquent, par la suite, seule la moitié, dite « amont », du guide 60 située entre l'extrémité 62 et ce plan P3 est décrite en détail. La partie, dite « avale », se déduit par symétrie par rapport au plan P3.

Entre ces deux extrémités 62 et 64, le guide 60 est entièrement compris entre une limite latérale gauche 66 et une limite latérale droite 68. Les limites 66 et 68 sont rectilignes et parallèles à la direction Y. La moitié amont du guide 60 est courbée et touche au moins une fois la limite 66 et au moins une fois la limite 68. Ici, au niveau de chaque point de contact entre le guide 60 et les limites 66 et 68, le guide 60 est tangent à la limite touchée. Dans ce mode de réalisation, la moitié amont du guide 60 présente seulement deux points de contact, respectivement, 70 et 72. Le point 70 est situé au niveau de l'extrémité distale 62 et le point 72 est situé au niveau du plan P3.

La moitié amont du guide 60 comporte une portion amont 74, une portion intermédiaire 78 et une portion avale 76 située immédiatement l'une après l'autre le long du guide 60. La portion 74 s'étend depuis un plan P4 jusqu'à un plan P5. La portion 76 s'étend depuis un plan P6 jusqu'au plan P3. La portion intermédiaire 78 s'étend depuis le plan P5 jusqu'au plan P6. Les plans P4, P5 et P6 sont parallèles au plan P1. Le plan P4 contient l'extrémité 62.

Les portions 74 et 76 sont décalées l'une par rapport à l'autre dans la direction X. Ici, elles s'étendent chacune sur au moins 25 % ou 30 % de la longueur de la moitié amont du guide 60. Les portions 74, 78 et 76 sont conformées pour se coupler optiquement, par un couplage évanescent, avec, respectivement, une portion amont 80, une portion intermédiaire 83 et une portion avale 82 du guide 40 lorsque ces portions sont situées à proximité les unes des autres. La portion amont 80 s'étend du plan P4 jusqu'au plan P5. La portion avale 82 s'étend du plan P6 jusqu'au plan P3. La portion intermédiaire 83 s'étend du plan P5 au plan P6.

Une portion du guide 60 est considérée comme étant à proximité d'une portion du guide 40 si la distance qui les sépare est inférieure à λ/2 sur toute la longueur de ces portions.

Pour obtenir facilement un couplage optique évanescent à travers l'interface 8 entre les portions 74 et 80 et entre les portions 76 et 82, ces portions s'étendent principalement parallèlement à la direction Y. A cet effet, le plus petit rayon de courbure des portions 74 et 76 est au moins deux ou trois fois supérieur au plus petit rayon de courbure Rmin₆₀ de la portion intermédiaire 78. Ainsi, les portions 74 et 76 sont pratiquement parallèles à la direction Y.

La portion intermédiaire 78 est la portion la plus inclinée par rapport à la direction Y. C'est donc la portion du guide 60 qui est potentiellement la plus difficile à coupler avec une portion à proximité du guide 40.

Dans ce mode de réalisation, la moitié amont du guide 60 présente un seul point d'inflexion 84 situé entre les points 70 et 72. Ce point 84 est situé au milieu de la portion intermédiaire 78. De plus, le rayon de courbure Rmin₆₀ est observé au niveau de ce point 84 d'inflexion. Ici, le point 84 est de plus un centre de symétrie de la moitié amont du guide 60.

Dans ce mode de réalisation, la moitié amont du guide 60 s'étend le long d'une trajectoire en forme de « S » ou de demi-sinusoïde. Par exemple, l'équation de cette trajectoire est définie par l'équation suivante dans un repère orthonormé X_{B}, Y_{B} dont l'origine est située à l'intersection de la limite 66 et d'un plan vertical passant par le point 84 et parallèle au plan P1 : y = (L/2) cos (πx/dₓ), où :
- y est l'ordonnée selon l'axe des ordonnées Y_{B} confondu avec la limite latérale 66,
- x est l'abscisse sur l'axe des abscisses X_{B} parallèle à la direction X et contenu dans le plan P4,
- L/2 est la distance entre les plans P4 et P3,
- dₓ est le décalage, dans la direction X, entre les points de départ et d'arrivée de cette trajectoire.

Le point de départ de la trajectoire est contenu dans le plan P4 et le point d'arrivée de cette trajectoire est contenu dans le plan P3.

Dans ces conditions, le rayon Rmin₆₀ au niveau du point 84 est égal à (L/2)²/ (π²dₓ). Pour limiter les pertes par courbures optiques dans le guide 60, ce rayon Rmin₆₀ est choisi supérieur à 5µm, 15 µm ou 20 µm. Ici, le rayon Rmin₆₀ est supérieur à 100 µm ou 200 µm.

Par la suite, les notations suivantes sont utilisées :
- nᵣ₆₀ est l'indice de réfraction du cœur du guide 60, et
- n_{eff60} est l'indice effectif du guide 60 à la longueur d'onde λ.

L'indice effectif n_{eff60} est constant sur toute la longueur du guide 60.

Pour qu'un couplage optique évanescent entre des portions à proximité des guides 40 et 60 soit possible, la section transversale du guide 60 est dimensionnée pour que l'indice n_{eff60} soit compris entre 0,9n_{eff40} et 1,1n_{eff40}. A cet effet, ici, la section transversale du cœur du guide 60 est identique à la section transversale du cœur du guide 40. De plus, puisque les cœurs et les gaines de ces guides 40 et 60 sont réalisés dans les mêmes matériaux, cela signifie que l'indice effectif n_{eff60} est égal à l'indice effectif n_{eff40}.

L'indice de réfraction nᵣ₈ de chaque matériau qui sépare le guide 40 de chacun des guides 60 est inférieur à 0,7min(nᵣ₄₀ ; nᵣ₆₀), où le symbole « min(...) » désigne la fonction qui retourne le plus petit des éléments entre parenthèses.

Enfin, la distance qui sépare le plan horizontal contenant la face inférieure 46 du guide 40 du plan horizontal contenant la face supérieure du guide 60 est petite. Ici, cette distance est comprise entre 50 nm et λ/2 et, de préférence, entre 50 nm et λ/4 ou entre 50 nm et λ/6. Pour les applications numériques présentées dans cette demande, cette distance a été prise égale à 200 nm.

Par la suite, les symétriques des portions 74, 76 et 78 du guide 60 par rapport au plan P3 portent les références numériques, respectivement, 94, 96 et 98.

La conception et la fabrication de l'ensemble 2 va maintenant être décrit en référence au procédé de la figure 3.

Le procédé débute par une phase 100 de conception du dispositif 20 de couplage. Lors de cette phase 100, les différents paramètres qui caractérisent la conformation de ce dispositif 20 sont déterminés, par exemple, comme expliqué ci-dessous.

Initialement, le paramètre dₓ est choisi pour que, quelle que soit la position x du guide 40 au-dessus du guide 60, le guide 40 se couple sélectivement avec une seule des portions de la partie amont du guide 60. La position x est une abscisse qui repère la position du guide 40 dans la direction X. Par la suite, le terme "position x", désigne uniquement une position du guide 40 située au-dessus du réseau 42. A cet effet, le paramètre dₓ est choisi supérieur à λ/2 et aussi supérieur à deux ou trois fois la largeur du guide 60 dans la direction X. La valeur du paramètre dₓ est aussi choisie assez petite pour que le rayon Rmin₆₀ soit grand et, par exemple, supérieur à 100 µm. Pour cela, la valeur du paramètre dₓ est souvent choisie inférieure à 3λ ou 4λ. Par exemple, la valeur du paramètre dₓ est choisie entre λ/2 et 1,5λ. Ici, la valeur du paramètre dₓ est prise égale à 1,2 µm.

Ensuite, la valeur du paramètre L du guide 60 est choisie pour maximiser la quantité d'énergie transmise entre les guides 40 et 60. Il a été déterminé que la position x du guide 40 la moins favorable à la transmission d'énergie entre les guides 40 et 60 est la position x = dₓ/4. La position x = dₓ/4 est la position où, dans le repère X_{B}, Y_{B}, la projection orthogonale du guide 40 sur un plan horizontal contenant le guide 60 passe par le point de coordonnées (dₓ/4 ; 0). Cette position particulière du guide 40 par rapport au guide 60 est schématiquement représentée sur la figure 4. Cela s'explique par le fait que, dans cette position particulière, le guide 40 est a proximité de la portion 78 la plus courbée. De plus, dans le cas particulier du guide 60, cela s'explique aussi par le fait que des interférences destructives peuvent apparaître entre le signal optique qui pénètre dans ce guide 60 au niveau de la portion 78 et le signal optique qui pénètre dans la portion 98.

La figure 5 est un graphe comportant deux courbes 106 et 108. Les courbes 106 et 108 représentent l'énergie du signal optique qui se propage dans, respectivement, le guide 40 et le guide 60 au fur et à mesure de la propagation du signal dans la direction Y. Sur ce graphe, l'axe des abscisses représente la quantité d'énergie du signal optique dans un guide en pourcentage de l'énergie initiale du signal optique dans le guide 40. L'axe des ordonnées représente la distance parcourue par le signal optique dans la direction Y. Ce graphe est obtenu pour la position relative des guides 40 et 60 représentée sur la figure 4. Au départ, 100 % de l'énergie du signal optique est dans le guide 40. Au niveau d'un premier croisement 110 (Fig. 4) entre les guides 40 et 60, une première partie de l'énergie du signal optique passe dans le guide 60. Ensuite, au niveau d'un second croisement 112 (Fig. 4) entre les guides 40 et 60, une seconde partie de l'énergie du signal optique passe dans le guide 60.

La quantité d'énergie au niveau de l'extrémité 64, pour différentes valeurs du paramètre L du guide 60, est construite par simulation numérique. Par exemple, le logiciel 3D-BPM (« Beam Propagation Method ») de la société Synopsys^{®} est utilisé pour cela.

Il existe une plus petite valeur du paramètre L pour laquelle l'énergie du signal optique au niveau de l'extrémité 64 est maximale. C'est cette valeur du paramètre L qui est choisie. Par exemple, dans le cas particulier décrit ici, la valeur du paramètre L est choisie égale à 57,5 µm. Pour cette valeur, 93% de l'énergie du signal optique initialement dans le guide 40 est transmise dans le guides 60 pour la position x = dₓ/4. Par exemple, cette valeur du paramètre L est recherchée entre 0,7Nₜ et 1,5Nt, où Nₜ est égal à λ/(2|n_{effa} - n_{effs}|), où n_{effa} et n_{effs} sont les indices effectifs des modes, respectivement, asymétrique et symétrique de propagation. Cette relation découle de l'équation (48) de la page 6 de l'article suivant : Henry F. TAYLOR et AI : "Guided Wave Optics", Proceedings of the IEEE, vol. 62, n08, 08/1974.

Ensuite, le pas d_{y} est fixé. Ici, le pas d_{y} est choisi pour que la distance qui sépare deux guides d'onde 50 immédiatement consécutifs soit supérieure à λ/2 et de préférence supérieur à λ. Cela permet d'éviter un couplage optique des guides d'onde 50 entre eux.

Il a été établi que la valeur du pas d_{y} a très peu d'influence sur le taux de transmission de l'énergie à travers l'interface 8 et cela quelle que soit la position x du guide 40. Ainsi, il existe un grand choix possible de valeurs acceptables pour le pas d_{y}. Pour minimiser l'encombrement de la zone 30, le pas d_{y} est choisi inférieur à L/10 ou L/20. Ici, le pas d_{y} est choisi égal à dₓ.

Ensuite, le paramètre d_{xc} est déterminé. Ici, le paramètre d_{xc} est choisi pour vérifier une première condition, à savoir que les guides 60 ne doivent pas être optiquement couplés entre eux. A cet effet, la valeur du paramètre d_{xc} est telle que le pas dₓ - d_{xc} est supérieure à λ/2 ou supérieure à 0,7 λ. Par ailleurs, la valeur du paramètre d_{xc} est choisie pour respecter la seconde condition suivante : que quelle que soit la position x du guide 40, le taux de transmission à travers l'interface 8 est supérieur à 50 % ou 60 %. Ce taux de transmission se calcule en prenant en compte la somme des énergies des signaux optiques au niveau des extrémités proximales 64 des guides 60. Ainsi, si pour une position x donnée, une première portion du guide 40 est couplée à une portion d'un premier guide 60 et une seconde portion du guide 40 est optiquement couplée à une seconde portion d'un second guide 60, le taux de transmission est calculé en tenant compte que l'énergie transmise est égale à la somme des énergies des signaux optiques qui se propagent dans ces premier et second guides d'onde.

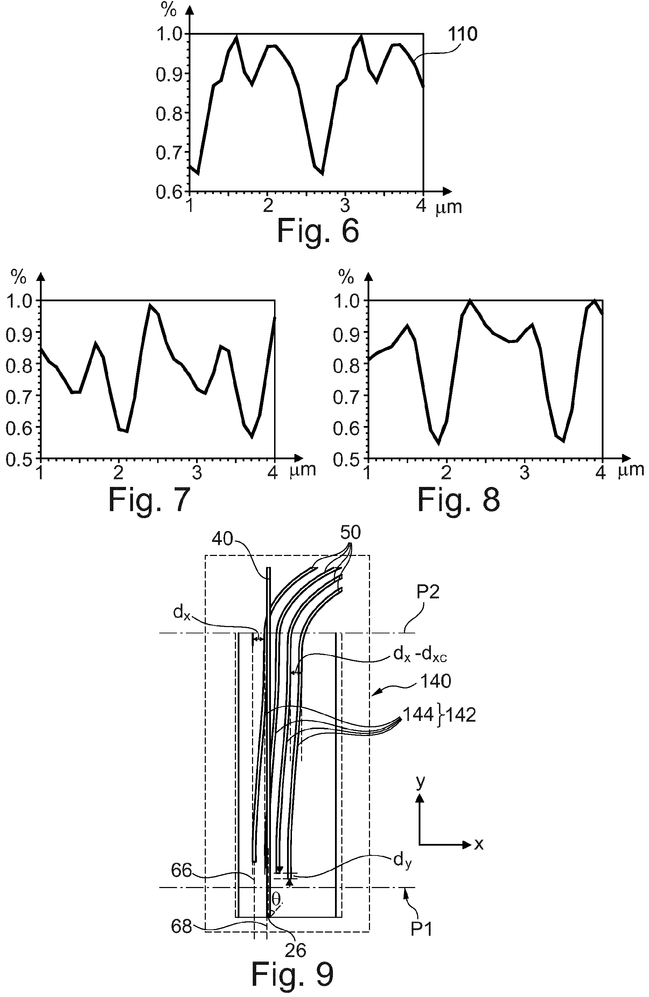

Il a été observé qu'il existe de nombreuses valeurs possibles du paramètre d_{xc} qui satisfont les deux conditions précédentes. Dès lors, ici, la valeur du paramètre d_{xc} choisie est celle qui satisfait la troisième condition suivante : la valeur du paramètre d_{xc} maximise, en plus, la moyenne des taux de transmission d'énergie à travers l'interface 8 pour chaque position x possible. Pour cela, ici, un profil de transmission d'énergie à travers l'interface 8 est construit pour plusieurs valeurs possibles du paramètre d_{xc}. Un exemple d'un tel profil d'énergie construit pour la valeur d_{xc} = -0,4 µm est représenté sur la figure 6. L'axe des abscisses représente la position x du guide 40. L'axe des ordonnées représente le taux de transmission de l'énergie à travers l'interface 8 exprimé en pourcentage. Sur la figure 7, le symbole "1" désigne la valeur 100%. Un tel profil est construit par simulation numérique en utilisant, par exemple, le logiciel 3D-BPM. La moyenne des valeurs de la courbe 110 (Fig. 7) correspond à la moyenne des taux de transmission à travers l'interface 8 pour chaque position x possible. La valeur du paramètre d_{xc} qui maximise cette moyenne est retenue. Ici, la valeur qui maximise cette moyenne est obtenue pour d_{xc} = -0,4 µm. Pour cette valeur, le taux de transmission est supérieur à 60% pour toutes les positions x possibles.

Enfin, le nombre N de guides 60 est choisi pour que la longueur du réseau 42 dans la direction X soit supérieure à la tolérance de l'outil de placement dans cette direction. Ainsi, il est certain que l'outil de placement arrivera à placer la puce 4 sur la puce 6 de telle sorte que le guide 40 est situé au-dessus du réseau 42. Dans ces conditions, la position x correspond nécessairement à une position où le taux de transmission est supérieur à 60 %.

L'outil de placement présente aussi une tolérance angulaire qui fait que l'angle θ n'est pas systématiquement égal à 0° mais, au contraire, varie entre θₘᵢₙ et θₘₐₓ. Pour les outils de placement conventionnels, cette tolérance angulaire est souvent comprise entre -0,1° et +0,1°.

Les figures 7 et 8 représentent les profils de transmission d'énergie obtenus avec les mêmes valeurs des paramètres que celles utilisées pour obtenir le profil de la figure 7 mais cette fois-ci pour θ = -1° (figure 7) et θ = +1° (figure 8). Le profil de la figure 6 a été obtenu pour l'angle θ = 0°. Comme il peut être observé, le taux de transmission dans ces profils reste systématiquement supérieur à 55 %. Ainsi, la zone 30 permet d'obtenir un taux de transmission de l'énergie à travers l'interface 8 supérieur à 50 % quelle que soit la valeur de l'angle θ comprise entre -1° et +1°. De plus, pour les valeurs θ = -0,1° et θ = +0,1°, le taux de transmission reste systématiquement supérieur à 60%. Le dispositif 20 de couplage est donc compatible avec un assemblage des puces 4 et 6 à l'aide d'un outil de placement présentant une tolérance angulaire de plus ou moins 0,1°.

Une fois la phase 100 de conception terminée, une phase 120 de fabrication de l'ensemble 2 est exécutée. La phase 120 est essentiellement composée de trois étapes 122, 124 et 126.

L'étape 122 est une étape de fabrication de la puce photonique 4 et donc de la partie du dispositif 20 réalisée dans cette puce 4. Cette étape 122 comporte donc notamment la réalisation du guide 40.

L'étape 124 est une étape de fabrication de la puce 6 et donc de la partie du dispositif 20 réalisée dans cette puce 6. L'étape 124 comporte donc la réalisation du réseau 42, de la zone 30 d'adaptation de phase et du sommateur 34. L'étape 124 est réalisée indépendamment de l'étape 122.

L'étape 126 est une étape de collage de la puce 4 sur la puce 6 pour obtenir l'ensemble 2. L'étape 126 comporte notamment une opération 128 de placement, à l'aide de l'outil de placement, de la puce 4 sur la puce 6. Lors de l'opération 128, le guide 40 est placé au-dessus du réseau 42.

La figure 9 représente un dispositif 140 de couplage optique identique au dispositif 20 sauf que le réseau 42 est remplacé par un réseau 142. Le réseau 142 est identique au réseau 42 sauf que chaque guide d'onde 60 est remplacé par un guide d'onde 144. Le guide 144 est identique au guide 60 sauf que la moitié avale du guide 60 est omise. Ainsi, chaque guide 144 est ici identique à la moitié amont du guide 60 après avoir subi une symétrie par rapport à un axe parallèle à la direction Y. Dès lors, dans ce mode de réalisation, chaque guide 144 comporte seulement deux points de contact avec, respectivement, les limites latérales 66 et 68 et donc aussi un seul point d'inflexion.

Le fonctionnement du dispositif 140 est le même que celui du dispositif 20. Toutefois, à cause de l'absence de symétrie de chaque guide 144 par rapport à un plan vertical parallèle à la direction X, la tolérance vis-à-vis d'une erreur de positionnement angulaire du guide 40 est moins symétrique. Autrement dit, la plage angulaire dans laquelle les valeurs de l'angle θ peuvent être comprises tout en conservant un taux de transmission supérieur à 50 % n'est pas symétrique par rapport à la valeur 0°.

Dans le cas du guide 144, la position x du guide 40 qui est la moins favorable pour la transmission d'énergie entre les guides 40 et 144 est la position x = dₓ/2. C'est donc cette position x = dₓ/2 qui est utilisée pour déterminer la valeur du paramètre L.

### Chapitre Il : Variantes

### Variante des guides d'onde 40, 60 et 144 :

En variante, le guide 40 n'est pas rectiligne mais courbé. Par exemple, le guide 40 est remplacé par un guide courbé. La forme de ce guide courbé est par exemple le symétrique de la forme du guide 60 par rapport à un plan vertical parallèle à la direction Y. Dans ce cas, à la fois le guide 40 et le guide 60 sont courbés.

Si l'erreur d'alignement dans la direction Y de l'outil de placement est négligeable, alors le guide 40 n'est pas nécessairement plus long que le guide 60. Dans ce cas, le guide 40 peut débuter au niveau du plan P1 et se terminer au niveau du plan P2.

De nombreux autres modes de réalisation du guide 60 ou 144 sont possibles. Par exemple, le guide 60 ou 144 peut comporter plus de trois ou quatre points de contact avec les limites 66 et 68. Dans ce cas, le guide 60 ou 144 comporte plus de deux points d'inflexion.

Dans un autre mode de réalisation, les portions 74 et 76 sont rectilignes et parallèles à la direction Y.

Les guides 60 et 144 peuvent aussi être rectilignes et non pas courbés. Dans ce cas, le guide 40 doit être courbé pour présenter une portion amont et une portion avale décalées dans la direction X. Par exemple, le guide 40 est conformé comme décrit pour le guide 60 ou 144. Dans ce mode de réalisation, les paramètres dₓ et L caractérisent la conformation du guide 40 et non plus la conformation du guide 60 ou 144. Le dimensionnement du guide 60 ou 144 est réalisé comme décrit précédemment pour le guide 40. En particulier, la longueur dans la direction Y du guide 60 ou 144 est choisie bien plus grande que celle du guide 40. Ensuite, la conformation du guide 40, et notamment le choix des valeurs des paramètres dₓ et L pour le guide 40, est réalisée comme décrit précédemment pour le guide 60. Enfin, la valeur du pas dₓ - d_{xc} entre les guides rectilignes 60 ou 144 est déterminée comme décrit précédemment pour le réseau 42. Dans ces conditions, quelle que soit la position x du guide 40 courbé, des portions de ce guide sont aptes à se coupler, par couplage évanescent, à des portions à proximité d'un ou deux guides rectilignes 60 ou 144 .

La valeur du paramètre dₓ peut être choisie pour que le guide 40 comporte une portion optiquement couplée par un couplage évanescent avec un premier exemplaire du guide 60 et une seconde portion optiquement couplée avec un deuxième exemplaire du guide 60, un troisième exemplaire du guide 60 étant situé entre ces premier et deuxième exemplaires du guide 60.

La valeur du paramètre d_{xc} peut être choisie sans prendre en compte la troisième condition selon laquelle la moyenne des taux de transmission pour les différentes positions x est maximisée.

### Autres variantes :

Le couplage optique entre le guide 40 et l'un quelconque des guides 50 peut être évité de façon différente. Par exemple, les dimensions du cœur du guide 50 sont ajustées pour que son indice effectif soit très différent de l'indice effectif n_{eff40}. Cela interdit le couplage optique de ce guide 50 avec le guide 40 sans pour cela avoir à adopter une trajectoire particulière pour le guide 50.

Le déphaseur 54 peut être réalisé différemment. Par exemple, en variante, la chaufferette est remplacée par un déphaseur réglable à diode PiN. Dans un mode de réalisation très simplifié, la longueur de chacun des guides 50 est ajustée pour que les signaux optiques reçus sur les entrées du sommateur 34 soient en phase. De préférence, cet ajustement des longueurs des guides 50 est combiné avec l'usage d'un déphaseur réglable comme ceux précédemment décrits. Dans un autre mode de réalisation, cet ajustement des longueurs des guides 50 et suivi, après le collage des puces l'une sur l'autre, d'une opération d'implantation d'impuretés dans les guides 50 pour ajuster le déphasage entre les signaux optiques qui se propagent dans ces guides et obtenir des signaux optiques en phase sur les entrées du sommateur de puissance. Par exemple, de tels méthodes d'implantation pour ajuster la phase d'un signal optique qui se propage dans un guide d'onde sont décrites dans la demande FR1553024.

Dans un autre mode de réalisation, le déphaseur est réalisé en plaçant un matériau à changement de phase à proximité du cœur du guide d'onde couplé à des électrodes pour y faire passer un courant. Le mode verra donc un indice effectif différent suivant l'état de la phase cristalline du matériau à changement de phase. Par exemple, le matériau à changement de phase est du GeSbTe connu sous l'acronyme GST.

### Chapitre III : Avantages des modes de réalisation décrits

L'utilisation d'un couplage évanescent entre le guide 40 et le guide 60 ou 144 est un moyen simple pour coupler optiquement la puce 4 à la puce 6 à travers l'interface 8 de collage. En particulier, un tel couplage évanescent est plus simple à réaliser que les dispositifs connus qui nécessitent la mise en œuvre de composants optiques tels qu'une lentille ou un miroir. De plus, les dispositifs de couplage décrits ici sont tolérants au moins vis-à-vis des erreurs d'alignement dans la direction X.

Le fait que le guide courbé ondule entre deux limites latérales et présente un seul point d'inflexion entre deux points droit et gauche successifs de contact, permet de rendre le dispositif de couplage tolérant vis-à-vis des erreurs de positionnement angulaire de la puce 4 sur la puce 6.

Le fait que chaque guide courbé présente un plan de symétrie vertical parallèle à la direction X, permet d'obtenir une tolérance vis-à-vis des erreurs de positionnement angulaire qui est symétrique par rapport à la position angulaire où cette erreur de positionnement angulaire est nulle. Autrement dit, cette tolérance est la même vis-à-vis des erreurs de position angulaire dans le sens trigonométrique ou anti-trigonométrique.

Le fait que le guide courbé comporte seulement deux points d'inflexion permet de minimiser le nombre de portions intermédiaires où le couplage optique entre le guide courbé et le guide 40 est plus difficile à obtenir. Cela permet donc de limiter la longueur du guide courbé et donc de décroître l'encombrement du dispositif de couplage.

## Revendications

1. Ensemble comportant :
- une première et une seconde puces photoniques (4, 6) rapportées l'une sur l'autre par collage au niveau d'une interface de collage,
- un dispositif (20; 140) de couplage optique qui raccorde optiquement entre elles les première et seconde puces photoniques à travers l'interface de collage pour permettre la propagation entre les première et seconde puces photoniques d'un signal optique à une longueur d'onde λ prédéterminée, ce dispositif de couplage optique comportant une première et une seconde parties réalisées dans, respectivement, la première puce et la seconde puce,
- la première partie du dispositif de couplage optique comporte un premier guide d'onde (40) qui s'étend principalement dans une première direction parallèle à l'interface de collage,
- la seconde partie du dispositif de couplage optique comporte un second guide d'onde (60; 144) apte à être couplé optiquement au premier guide d'onde, lorsque le premier guide d'onde est situé au-dessus de ce second guide d'onde, par un couplage évanescent qui permet de transférer au moins 50% de l'énergie du signal optique, à la longueur d'onde λ, qui se propage dans le premier guide d'onde vers ce second guide d'onde,
**caractérisé en ce que** :
- la seconde partie du dispositif de couplage optique comporte :
- un réseau (42; 142) de plusieurs exemplaires identiques du second guide d'onde, ces seconds guides d'onde étant décalés les uns par rapport aux autres, dans une seconde direction, d'un pas supérieure à λ/2, cette seconde direction étant parallèle à l'interface de collage et perpendiculaire à la première direction, et
- un sommateur (34) de puissance comportant des entrées optiquement raccordées à une extrémité de chacun des seconds guides d'onde du réseau, et une sortie sur laquelle le sommateur délivre l'addition des signaux optiques se propageant dans chacun des seconds guides d'onde,
- chacun des premier et second guides d'onde comporte des portions amont (74, 80), intermédiaire (78, 83) et avale (76, 82) disposées immédiatement l'une après l'autre dans le sens de propagation du signal optique, les portions amont et avale du premier guide d'onde ou de chaque second guide d'onde étant décalées l'une par rapport à l'autre dans la seconde direction, et
- les conformations du premier guide d'onde et des seconds guides d'onde sont telles que, pour toute position du premier guide d'onde au-dessus du réseau de seconds guides d'onde, la distance entre l'une des portions du premier guide d'onde et l'une des portions d'un des seconds guides d'onde est inférieure à λ/2.

2. Ensemble selon la revendication 1, dans lequel le guide d'onde (60; 144) dont les portions amont et avale sont décalées comporte les caractéristiques suivantes :
- ce guide d'onde est entièrement compris entre des limites latérales gauche (66) et droite (68), chacune de ces limites latérales étant rectiligne et parallèle à la première direction,
- ce guide d'onde est tangent à la limite latérale gauche en au moins un premier point gauche (72) de contact et tangent à la limite latérale droite en au moins un point droit (70) de contact, et
- entre chaque paire de points droit et gauche de contact immédiatement consécutifs le long de ce guide d'onde, le guide d'onde présente un seul point d'inflexion (84).

3. Ensemble selon la revendication 2, dans lequel le guide d'onde (60) dont les portions amont et avale sont décalées est symétrique par rapport à un plan (P3) perpendiculaire à la première direction.

4. Ensemble selon la revendication 3, dans lequel le guide d'onde (60) dont les portions amont et avale sont décalées comporte uniquement trois points de contact formant deux paires différentes de points droit et gauche de contact immédiatement consécutifs le long de ce guide d'onde.

5. Ensemble selon l'une quelconque des revendications 2 à 4, dans lequel la distance entre les limites latérales droite et gauche est supérieure à λ/2.

6. Ensemble selon l'une quelconque des revendications précédentes, dans lequel :
- le premier guide d'onde (40) présente un indice effectif n_{eff1} à la longueur d'onde λ et comporte un cœur comportant une première face (46) tournée vers l'interface de collage, cette première face s'étendant dans un premier plan parallèle à l'interface de collage, ce cœur étant réalisé dans un matériau d'indice de réfraction nᵣ₁ à la longueur d'onde λ,
- chaque second guide d'onde (60; 144) présente un indice effectif n_{eff2} à la longueur d'onde λ compris entre 0,9n_{eff1} et 1,1n_{eff1} et comporte un cœur comportant une seconde face tournée vers l'interface de collage, ce cœur étant réalisé dans un matériau d'indice de réfraction nᵣ₂ à la longueur d'onde λ, cette seconde face s'étend dans un second plan parallèle à l'interface de collage, la distance entre le second plan et le premier plan étant comprise entre 50 nm et λ/2,
- l'espace entre les premier et second plans est rempli d'un matériau dont l'indice de réfraction à la longueur d'onde λ est inférieur à 0,7Min(nᵣ₁; nᵣ₂), où Min(nᵣ₁; nᵣ₂) est la fonction qui retourne le plus petit des indices de réfraction nᵣ₁ et nᵣ₂.

7. Ensemble selon l'une quelconque des revendications précédentes, dans lequel :
- toutes les portions amont et avale qui sont décalées l'une par rapport à l'autre sont située entre un premier plan (P1) et un second plan (P2) perpendiculaires à la première direction, et
- le guide d'onde (40) dont les portions amont et avale ne sont pas décalées est un guide d'onde rectiligne dont la longueur est supérieure à d1+3µm, où d1 est la distance qui sépare les premier et second plans (P1, P2).

8. Ensemble selon l'une quelconque des revendications précédentes, dans lequel la seconde partie du dispositif de couplage optique comporte un déphaseur réglable (54) apte, après le collage des première et seconde puces photoniques l'une sur l'autre, à ajuster la phase des signaux optiques reçus sur les entrées du sommateur de puissance pour que ces signaux optiques arrivent en phase sur les entrées du sommateur de puissance.

9. Seconde puce photonique (6) pour la réalisation d'un ensemble conforme à l'une quelconque des revendications précédentes, cette seconde puce photonique comportant :
- une interface de collage destinée à rapporter cette seconde puce photonique sur la première puce photonique, et
- une seconde partie du dispositif (20; 140) de couplage optique qui raccorde optiquement entre elles les première et seconde puces photoniques à travers l'interface de collage pour permettre la propagation entre les première et seconde puces photoniques d'un signal optique à une longueur d'onde λ prédéterminée, cette seconde partie comportant un second guide d'onde (60; 144) apte à être couplé optiquement au premier guide d'onde, lorsque le premier guide d'onde est situé au-dessus de ce second guide d'onde, par un couplage évanescent qui permet de transférer au moins 50% de l'énergie du signal optique, à la longueur d'onde λ, qui se propage dans le premier guide d'onde vers ce second guide d'onde,
où le second guide d'onde s'étend principalement dans un première direction,
**caractérisé en ce que** :
- la seconde partie du dispositif de couplage optique comporte :
- un réseau (42; 142) de plusieurs exemplaires identiques du second guide d'onde, ces seconds guides d'onde étant décalés les uns par rapport aux autres, dans une seconde direction, d'un pas supérieure à λ/2, cette seconde direction étant parallèle à l'interface de collage et perpendiculaire à la première direction, et
- un sommateur (34) de puissance comportant des entrées optiquement raccordées à une extrémité de chacun des seconds guides d'onde du réseau, et une sortie sur laquelle le sommateur délivre l'addition des signaux optiques se propageant dans chacun des seconds guides d'onde,
- chacun des seconds guides d'onde comporte des portions amont (74, 80), intermédiaire (78, 83) et avale (76, 82) disposées immédiatement l'une après l'autre dans le sens de propagation du signal optique, les portions amont et avale de chaque second guide d'onde étant décalées l'une par rapport à l'autre dans la seconde direction, et
- les conformations des seconds guides d'onde sont telles que, pour toute position du premier guide d'onde au-dessus du réseau de seconds guides d'onde, la distance entre l'une des portions du premier guide d'onde et l'une des portions d'un des seconds guides d'onde est inférieure à λ/2.

10. Procédé de fabrication d'un ensemble conforme à la revendication 1, dans lequel le procédé comporte :
- le collage (126) au niveau d'une interface de collage d'une première et d'une seconde puces photoniques rapportées l'une sur l'autre,
- la réalisation (122, 124) d'un dispositif de couplage optique qui raccorde optiquement entre elles les première et seconde puces photoniques à travers l'interface de collage pour permettre la propagation entre les première et seconde puces photoniques d'un signal optique à une longueur d'onde λ prédéterminée, ce dispositif de couplage optique comportant une première et une seconde parties réalisées dans, respectivement, la première puce et la seconde puce,
- la première partie du dispositif de couplage optique comportant un premier guide d'onde qui s'étend principalement dans une première direction parallèle à l'interface de collage,
- la seconde partie du dispositif de couplage optique comportant un second guide d'onde apte à être couplé optiquement au premier guide d'onde, lorsque le premier guide d'onde est situé au-dessus de ce second guide d'onde, par un couplage évanescent qui permet de transférer au moins 50% de l'énergie du signal optique, à la longueur d'onde λ, qui se propage dans le premier guide d'onde vers ce second guide d'onde,
**caractérisé en ce que** la réalisation du dispositif de couplage comporte la réalisation (124) d'un dispositif de couplage dans lequel :
- la seconde partie du dispositif de couplage optique comporte :
- un réseau de plusieurs exemplaires identiques du second guide d'onde, ces seconds guides d'onde étant décalés les uns par rapport aux autres, dans une seconde direction, d'un pas supérieure à λ/2, cette seconde direction étant parallèle à l'interface de collage et perpendiculaire à la première direction, et
- un sommateur de puissance comportant des entrées optiquement raccordées à une extrémité de chacun des seconds guides d'onde du réseau, et une sortie sur laquelle le sommateur délivre l'addition des signaux optiques se propageant dans chacun des seconds guides d'onde,
- chacun des premier et second guides d'onde comporte des portions amont, intermédiaire et avale disposées immédiatement l'une après l'autre dans le sens de propagation du signal optique, les portions amont et avale du premier guide d'onde ou de chaque second guide d'onde étant décalées l'une par rapport à l'autre dans la seconde direction, et
- les conformations du premier guide d'onde et des seconds guides d'onde sont telles que, pour toute position du premier guide d'onde au-dessus du réseau de seconds guides d'onde, la distance entre l'une des portions du premier guide d'onde et l'une des portions d'un des seconds guides d'onde est inférieure à λ/2.

## Patentansprüche

1. Anordnung, die Folgendes umfasst:
- einen ersten und einen zweiten Photonenchip (4, 6), die an einer Klebeschnittstelle durch Kleben übereinander angebracht sind,
- eine Vorrichtung (20; 140) zur optischen Kopplung, die den ersten und den zweiten Photonenchip durch die Klebeschnittstelle hindurch optisch miteinander verbindet, um die Ausbreitung eines optischen Signals mit einer vorbestimmten Wellenlänge λ zwischen dem ersten und dem zweiten Photonenchip zu ermöglichen, wobei diese Vorrichtung zur optischen Kopplung einen ersten und einen zweiten Teil umfasst, die in dem ersten Chip bzw. dem zweiten Chip ausgeführt sind,
- wobei der erste Teil der Vorrichtung zur optischen Kopplung einen ersten Wellenleiter (40) umfasst, der sich im Wesentlichen in einer ersten Richtung parallel zu der Klebeschnittstelle erstreckt,
- wobei der zweite Teil der Vorrichtung zur optischen Kopplung einen zweiten Wellenleiter (60; 144) umfasst, der dazu fähig ist, mit dem ersten Wellenleiter optisch gekoppelt zu werden, wenn sich der erste Wellenleiter über diesem zweiten Wellenleiter befindet, durch eine evaneszente Kopplung, die es ermöglicht, mindestens 50 % der Energie des optischen Signals mit der Wellenlänge λ, das sich in dem ersten Wellenleiter ausbreitet, zu diesem zweiten Wellenleiter zu übertragen,
**dadurch gekennzeichnet, dass**:
- der zweite Teil der Vorrichtung zur optischen Kopplung Folgendes umfasst:
- ein Netz (42; 142) aus mehreren identischen Exemplaren des zweiten Wellenleiters, wobei diese zweiten Wellenleiter in einer zweiten Richtung um einen Abstand von mehr als λ/2 zueinander versetzt sind, wobei diese zweite Richtung parallel zu der Klebeschnittstelle und senkrecht zu der ersten Richtung ist, und
- einen Leistungssummierer (34), der Eingänge, die mit einem Ende jedes der zweiten Wellenleiter des Netzes optisch verbunden sind, und einen Ausgang, an dem der Summierer die Addition der optischen Signale, die sich in jedem der zweiten Wellenleiter ausbreiten, bereitstellt, umfasst,
- jeder von dem ersten und dem zweiten Wellenleiter einen stromaufwärtigen (74, 80), einen mittleren (78, 83) und einen stromabwärtigen (76, 82) Abschnitt umfasst, die in der Ausbreitungsrichtung des optischen Signals unmittelbar hintereinander angeordnet sind, wobei der stromaufwärtige und der stromabwärtige Abschnitt des ersten Wellenleiters oder jedes zweiten Wellenleiters in der zweiten Richtung zueinander versetzt sind, und
- die Ausgestaltungen des ersten Wellenleiters und der zweiten Wellenleiter derart sind, dass für jede Position des ersten Wellenleiters über dem Netz von zweiten Wellenleitern die Entfernung zwischen einem der Abschnitte des ersten Wellenleiters und einem der Abschnitte eines der zweiten Wellenleiter weniger als λ/2 beträgt.

2. Anordnung nach Anspruch 1, wobei der Wellenleiter (60; 144), dessen stromaufwärtiger und stromabwärtiger Abschnitt versetzt sind, die folgenden Eigenschaften umfasst:
- dieser Wellenleiter liegt vollständig zwischen einer linken (66) und einer rechten (68) seitlichen Begrenzung, wobei jede dieser seitlichen Begrenzungen geradlinig und parallel zu der ersten Richtung ist,
- dieser Wellenleiter tangiert die linke seitliche Begrenzung an mindestens einem ersten linken Kontaktpunkt (72) und tangiert die rechte seitliche Begrenzung an mindestens einem rechten Kontaktpunkt (70) und
- zwischen jedem Paar aus einem rechten und einem linken Kontaktpunkt, die entlang dieses Wellenleiters unmittelbar aufeinanderfolgen, weist der Wellenleiter einen einzigen Wendepunkt (84) auf.

3. Anordnung nach Anspruch 2, wobei der Wellenleiter (60), dessen stromaufwärtiger und stromabwärtiger Abschnitt versetzt sind, in Bezug auf eine zu der ersten Richtung senkrechte Ebene (P3) symmetrisch ist.

4. Anordnung nach Anspruch 3, wobei der Wellenleiter (60), dessen stromaufwärtiger und stromabwärtiger Abschnitt versetzt sind, nur drei Kontaktpunkte umfasst, die zwei unterschiedliche Paare aus einem rechten und einem linken Kontaktpunkt, die entlang dieses Wellenleiters unmittelbar aufeinanderfolgen, bilden.

5. Anordnung nach einem der Ansprüche 2 bis 4, wobei die Entfernung zwischen der rechten und der linken seitlichen Begrenzung mehr als λ/2 beträgt.

6. Anordnung nach einem der vorhergehenden Ansprüche, wobei:
- der erste Wellenleiter (40) einen effektiven Index n_{eff1} bei der Wellenlänge λ aufweist und einen Kern umfasst, der eine erste Fläche (46) umfasst, die zu der Klebeschnittstelle zeigt, wobei sich diese erste Fläche in einer ersten Ebene parallel zu der Klebeschnittstelle erstreckt, wobei dieser Kern aus einem Material mit einem Brechungsindex nᵣ₁ bei der Wellenlänge λ besteht,
- jeder zweite Wellenleiter (60; 144) einen effektiven Index n_{eff2} bei der Wellenlänge λ zwischen 0,9n_{eff1} und 1,1n_{eff1} aufweist und einen Kern umfasst, der eine zweite Fläche umfasst, die zu der Klebeschnittstelle zeigt, wobei dieser Kern aus einem Material mit einem Brechungsindex nᵣ₂ bei der Wellenlänge λ besteht, wobei sich diese zweite Fläche in einer zweiten Ebene parallel zu der Klebeschnittstelle erstreckt, wobei die Entfernung zwischen der zweiten Ebene und der ersten Ebene zwischen 50 nm und λ/2 beträgt,
- der Raum zwischen der ersten und der zweiten Ebene mit einem Material gefüllt ist, dessen Brechungsindex bei der Wellenlänge λ weniger als 0,7Min(nᵣ₁; nᵣ₂) beträgt, wobei Min(nᵣ₁; nᵣ₂) die Funktion ist, die den kleinsten der Brechungsindizes nᵣ₁ und nᵣ₂ liefert.

7. Anordnung nach einem der vorhergehenden Ansprüche, wobei:
- sich alle stromaufwärtigen und stromabwärtigen Abschnitte, die zueinander versetzt sind, zwischen einer ersten Ebene (P1) und einer zweiten Ebene (P2), die senkrecht zu der ersten Richtung sind, befinden und
- der Wellenleiter (40), dessen stromaufwärtiger und stromabwärtiger Abschnitt nicht versetzt sind, ein geradliniger Wellenleiter ist, dessen Länge mehr als d1+3µm beträgt, wobei d1 die Entfernung ist, die die erste und die zweite Ebene (P1, P2) voneinander trennt.

8. Anordnung nach einem der vorhergehenden Ansprüche, wobei der zweite Teil der Vorrichtung zur optischen Kopplung einen einstellbaren Phasenschieber (54) umfasst, der, nachdem der erste und der zweite Photonenchip aufeinander geklebt wurden, dazu fähig ist, die Phase der an den Eingängen des Leistungssummierers empfangenen optischen Signale anzupassen, damit diese optischen Signale an den Eingängen des Leistungssummierers in Phase ankommen.

9. Zweiter Photonenchip (6) zur Bildung einer Anordnung nach einem der vorhergehenden Ansprüche, wobei dieser zweite Photonenchip Folgendes umfasst:
- eine Klebeschnittstelle, die dazu bestimmt ist, diesen zweiten Photonenchip an dem ersten Photonenchip anzubringen, und
- einen zweiten Teil der Vorrichtung (20; 140) zur optischen Kopplung, die den ersten und den zweiten Photonenchip durch die Klebeschnittstelle hindurch optisch miteinander verbindet, um die Ausbreitung eines optischen Signals mit einer vorbestimmten Wellenlänge λ zwischen dem ersten und dem zweiten Photonenchip zu ermöglichen, wobei dieser zweite Teil einen zweiten Wellenleiter (60; 144) umfasst, der dazu fähig ist, mit dem ersten Wellenleiter optisch gekoppelt zu werden, wenn sich der erste Wellenleiter über diesem zweiten Wellenleiter befindet, durch eine evaneszente Kopplung, die es ermöglicht, mindestens 50 % der Energie des optischen Signals mit der Wellenlänge λ, das sich in dem ersten Wellenleiter ausbreitet, zu diesem zweiten Wellenleiter zu übertragen,
wobei sich der zweite Wellenleiter im Wesentlichen in einer ersten Richtung erstreckt,
**dadurch gekennzeichnet, dass**:
- der zweite Teil der Vorrichtung zur optischen Kopplung Folgendes umfasst:
- ein Netz (42; 142) aus mehreren identischen Exemplaren des zweiten Wellenleiters, wobei diese zweiten Wellenleiter in einer zweiten Richtung um einen Abstand von mehr als λ/2 zueinander versetzt sind, wobei diese zweite Richtung parallel zu der Klebeschnittstelle und senkrecht zu der ersten Richtung ist, und
- einen Leistungssummierer (34), der Eingänge, die mit einem Ende jedes der zweiten Wellenleiter des Netzes optisch verbunden sind, und einen Ausgang, an dem der Summierer die Addition der optischen Signale, die sich in jedem der zweiten Wellenleiter ausbreiten, bereitstellt, umfasst,
- jeder der zweiten Wellenleiter einen stromaufwärtigen (74, 80), einen mittleren (78, 83) und einen stromabwärtigen (76, 82) Abschnitt umfasst, die in der Ausbreitungsrichtung des optischen Signals unmittelbar hintereinander angeordnet sind, wobei der stromaufwärtige und der stromabwärtige Abschnitt jedes zweiten Wellenleiters in der zweiten Richtung zueinander versetzt sind, und
- die Ausgestaltungen der zweiten Wellenleiter derart sind, dass für jede Position des ersten Wellenleiters über dem Netz von zweiten Wellenleitern die Entfernung zwischen einem der Abschnitte des ersten Wellenleiters und einem der Abschnitte eines der zweiten Wellenleiter weniger als λ/2 beträgt.

10. Verfahren zur Herstellung einer Anordnung nach Anspruch 1, wobei das Verfahren Folgendes umfasst:
- Zusammenkleben (126), an einer Klebeschnittstelle, eines ersten und eines zweiten Photonenchips, die übereinander angebracht werden,
- Bilden (122, 124) einer Vorrichtung zur optischen Kopplung, die den ersten und den zweiten Photonenchip durch die Klebeschnittstelle hindurch optisch miteinander verbindet, um die Ausbreitung eines optischen Signals mit einer vorbestimmten Wellenlänge λ zwischen dem ersten und dem zweiten Photonenchip zu ermöglichen, wobei diese Vorrichtung zur optischen Kopplung einen ersten und einen zweiten Teil umfasst, die in dem ersten Chip bzw. dem zweiten Chip ausgeführt sind,
- wobei der erste Teil der Vorrichtung zur optischen Kopplung einen ersten Wellenleiter umfasst, der sich im Wesentlichen in einer ersten Richtung parallel zu der Klebeschnittstelle erstreckt,
- wobei der zweite Teil der Vorrichtung zur optischen Kopplung einen zweiten Wellenleiter umfasst, der dazu fähig ist, mit dem ersten Wellenleiter optisch gekoppelt zu werden, wenn sich der erste Wellenleiter über diesem zweiten Wellenleiter befindet, durch eine evaneszente Kopplung, die es ermöglicht, mindestens 50 % der Energie des optischen Signals mit der Wellenlänge λ, das sich in dem ersten Wellenleiter ausbreitet, zu diesem zweiten Wellenleiter zu übertragen,
**dadurch gekennzeichnet, dass** das Bilden der Kopplungsvorrichtung das Bilden (124) einer Kopplungsvorrichtung umfasst, bei der:
- der zweite Teil der Vorrichtung zur optischen Kopplung Folgendes umfasst:
- ein Netz aus mehreren identischen Exemplaren des zweiten Wellenleiters, wobei diese zweiten Wellenleiter in einer zweiten Richtung um einen Abstand von mehr als λ/2 zueinander versetzt sind, wobei diese zweite Richtung parallel zu der Klebeschnittstelle und senkrecht zu der ersten Richtung ist, und
- einen Leistungssummierer, der Eingänge, die mit einem Ende jedes der zweiten Wellenleiter des Netzes optisch verbunden sind, und einen Ausgang, an dem der Summierer die Addition der optischen Signale, die sich in jedem der zweiten Wellenleiter ausbreiten, bereitstellt, umfasst,
- jeder von dem ersten und dem zweiten Wellenleiter einen stromaufwärtigen, einen mittleren und einen stromabwärtigen Abschnitt umfasst, die in der Ausbreitungsrichtung des optischen Signals unmittelbar hintereinander angeordnet sind, wobei der stromaufwärtige und der stromabwärtige Abschnitt des ersten Wellenleiters oder jedes zweiten Wellenleiters in der zweiten Richtung zueinander versetzt sind, und
- die Ausgestaltungen des ersten Wellenleiters und der zweiten Wellenleiter derart sind, dass für jede Position des ersten Wellenleiters über dem Netz von zweiten Wellenleitern die Entfernung zwischen einem der Abschnitte des ersten Wellenleiters und einem der Abschnitte eines der zweiten Wellenleiter weniger als λ/2 beträgt.

## Claims

1. Assembly comprising:
- first and second photonic chips (4, 6) adjoined to each other by bonding via a bonding interface,
- an optical coupling device (20; 140) that optically connects together the first and second photonic chips through the bonding interface in order to allow propagation between the first and second photonic chips of an optical signal at a predetermined wavelength A, this optical coupling device comprising first and second portions produced in the first and second chips, respectively,
- the first portion of the optical coupling device comprises a first waveguide (40) that mainly extends in a first direction parallel to the bonding interface,
- the second portion of the optical coupling device comprises a second waveguide (60; 144) able to be optically coupled to the first waveguide, when the first waveguide is located above this second waveguide, via evanescent coupling that allows at least 50% of the energy of the optical signal, at the wavelength λ, propagating through the first waveguide to be transferred to this second waveguide,
**characterized in that**:
- the second portion of the optical coupling device comprises:
- an array (42; 142) of a plurality of identical copies of the second waveguide, these second waveguides being offset with respect to one another, in a second direction, by a pitch larger than A/2, this second direction being parallel to the bonding interface and perpendicular to the first direction, and
- a power summer (34) comprising inputs that are optically connected to one end of each of the second waveguides of the array, and an output on which the summer delivers the addition of the optical signals propagating through each of the second waveguides,
- each of the first and second waveguides comprises upstream (74, 80), intermediate (78, 83) and downstream (76, 82) segments placed immediately one after the other in the direction of propagation of the optical signal, the upstream and downstream segments of the first waveguide or of each second waveguide being offset with respect to each other in the second direction, and
- the configurations of the first waveguide and of the second waveguides are such that, for any position of the first waveguide above the array of second waveguides, the distance between one of the segments of the first waveguide and one of the segments of one of the second waveguides is smaller than A/2.

2. Assembly according to Claim 1, wherein the waveguide (60; 144) the upstream and downstream segments of which are offset comprises the following features:
- this waveguide is entirely comprised between left and right lateral limits (66, 68), each of these lateral limits being rectilinear and parallel to the first direction,
- this waveguide is tangent to the left lateral limit at at least one first left point of contact (72) and tangent to the right lateral limit at at least one right point of contact (70), and
- between each pair of left and right points of contact immediately consecutive along this waveguide, the waveguide has a single point of inflection (84).

3. Assembly according to Claim 2, wherein the waveguide (60) the upstream and downstream segments of which are offset is symmetric with respect to a plane (P3) perpendicular to the first direction.

4. Assembly according to Claim 3, wherein the waveguide (60) the upstream and downstream segments of which are offset comprises solely three points of contact forming two different pairs of left and right points of contact immediately consecutive along this waveguide.

5. Assembly according to any of Claims 2 to 4, wherein the distance between the left and right lateral limits is larger than A/2.

6. Assembly according to any of the preceding claims, wherein:
- the first waveguide (40) has an effective index n_{eff1} at the wavelength λ and comprises a core comprising a first face (46) turned toward the bonding interface, this first face lying in a first plane parallel to the bonding interface, this core being made of a material of refractive index nᵣ₁ at the wavelength A,
- each second waveguide (60; 144) has an effective index n_{eff2} at the wavelength λ comprised between 0.9n_{eff1} and 1.1n_{eff1} and comprises a core comprising a second face turned toward the bonding interface, this core being made of a material of refractive index nᵣ₂ at the wavelength A, this second face lying in a second plane parallel to the bonding interface, the distance between the second plane and the first plane being comprised between 50 nm and A/2,
- the space between the first and second planes is filled with a material the refractive index of which at the wavelength λ is lower than 0.7Min(nᵣ₁; nᵣ₂), where Min(nᵣ₁; nᵣ₂) is the function that returns the lowest of the refractive indices nᵣ₁ and nᵣ₂.

7. Assembly according to any of the preceding claims, wherein:
- all of the upstream and downstream segments that are offset with respect to each other are located between a first plane (P1) and a second plane (P2) that are perpendicular to the first direction, and
- the waveguide (40) the upstream and downstream segments of which are not offset is a rectilinear waveguide the length of which is larger than d1+3µm, where d1 is the distance that separates the first and second planes (P1, P2).

8. Assembly according to any of the preceding claims, wherein the second portion of the optical coupling device comprises an adjustable phase shifter (54) able, after the first and second photonic chips have been bonded to each other, to adjust the phase of the optical signals received on the inputs of the power summer so that these optical signals arrive in phase on the inputs of the power summer.

9. Second photonic chip (6) for producing an assembly according to any of the preceding claims, this second photonic chip comprising:
- a bonding interface intended to adjoin this second photonic chip to the first photonic chip, and
- a second portion of the optical coupling device (20; 140), which optically connects together the first and second photonic chips through the bonding interface in order to allow propagation between the first and second photonic chips of an optical signal at a predetermined wavelength A, this second portion comprising a second waveguide (60; 144) able to be optically coupled to the first waveguide, when the first waveguide is located above this second waveguide, via evanescent coupling that allows at least 50% of the energy of the optical signal, at the wavelength λ, propagating through the first waveguide to be transferred to this second waveguide,
the second waveguide mainly extending in a first direction,
**characterized in that**:
- the second portion of the optical coupling device comprises:
- an array (42; 142) of a plurality of identical copies of the second waveguide, these second waveguides being offset with respect to one another, in a second direction, by a pitch larger than A/2, this second direction being parallel to the bonding interface and perpendicular to the first direction, and
- a power summer (34) comprising inputs that are optically connected to one end of each of the second waveguides of the array, and an output on which the summer delivers the addition of the optical signals propagating through each of the second waveguides,
- each of the second waveguides comprises upstream (74, 80), intermediate (78, 83) and downstream (76, 82) segments placed immediately one after the other in the direction of propagation of the optical signal, the upstream and downstream segments of each second waveguide being offset with respect to each other in the second direction, and
- the configurations of the second waveguides are such that, for any position of the first waveguide above the array of second waveguides, the distance between one of the segments of the first waveguide and one of the segments of one of the second waveguides is smaller than A/2.

10. Process for fabricating an assembly according to Claim 1, wherein the process comprises:
- bonding (126), via a bonding interface, first and second photonic chips adjoined to each other,
- producing (122, 124) an optical coupling device that optically connects together the first and second photonic chips through the bonding interface in order to allow propagation between the first and second photonic chips of an optical signal at a predetermined wavelength A, this optical coupling device comprising first and second portions produced in the first and second chips, respectively,
- the first portion of the optical coupling device comprising a first waveguide that mainly extends in a first direction parallel to the bonding interface,
- the second portion of the optical coupling device comprising a second waveguide able to be optically coupled to the first waveguide, when the first waveguide is located above this second waveguide, via evanescent coupling that allows at least 50% of the energy of the optical signal, at the wavelength λ, propagating through the first waveguide to be transferred to this second waveguide,
**characterized in that** production of the coupling device comprises producing (124) a coupling device in which:
- the second portion of the optical coupling device comprises:
- an array of a plurality of identical copies of the second waveguide, these second waveguides being offset with respect to one another, in a second direction, by a pitch larger than A/2, this second direction being parallel to the bonding interface and perpendicular to the first direction, and
- a power summer comprising inputs that are optically connected to one end of each of the second waveguides of the array, and an output on which the summer delivers the addition of the optical signals propagating through each of the second waveguides,
- each of the first and second waveguides comprises upstream, intermediate and downstream segments placed immediately one after the other in the direction of propagation of the optical signal, the upstream and downstream segments of the first waveguide or of each second waveguide being offset with respect to each other in the second direction, and
- the configurations of the first waveguide and of the second waveguides are such that, for any position of the first waveguide above the array of second waveguides, the distance between one of the segments of the first waveguide and one of the segments of one of the second waveguides is smaller than A/2.
